# EUROPEAN PATENT SPECIFICATION

(11) **EP 2 383 177 B1**
(45) Date of publication and mention of the grant of the patent: **27.08.2014**
(21) Application number: 10161271.1
(22) Date of filing: 28.04.2010
(51) Int. Cl.: B62L 1/14

(54) **Front brake of racing bicycle**
Vorderbremse eines Rennrads
Frein avant de vélo de course

(43) Date of publication of application: 02.11.2011
(73) Proprietor: Tektro Technology Corporation, Changhua County (TW)
(72) Inventor: Tsai, Szu-Fang, Changhua County (TW)
(74) Representative: Lang, Christian

(56) References cited:
- EP-A1- 0 596 237
- DD-A1- 275 022
- DE-A1-102009 024 890
- US-A- 4 632 225
- US-A- 5 293 964
- US-A1- 2008 035 431
- Anonymous: "The Mini-V (917A)" Tektro Brake Systems 9 December 2004 (2004-12-09), pages 1-1, XP002590100 Retrieved from the Internet: URL:http://web.archive.org/web/20041209043 742/http://www.tektro.com/bmx/917.htm [retrieved on 2010-07-02]
- Thurston J.: "Could It Be This Simple" Bicycle Tidbits 10 April 2005 (2005-04-10), pages 1-2, XP002590101 Retrieved from the Internet: URL:http://web.archive.org/web/20050410123 206/http://bicycles.thurstons.us/18$_solut ion.htm [retrieved on 2010-07-02]
- derekshred: "FRM mini dp4 brakes" Weight Weenies 15 November 2009 (2009-11-15), pages 1-4, XP002590102 Retrieved from the Internet: URL:http://weightweenies.starbike.com/foru m/viewtopic.php?f=4&t=65272 [retrieved on 2010-07-02]
- Anonymous: "Mini-V 926AL" Tektro Brake Systems 4 April 2008 (2008-04-04), pages 1-1, XP002590103 Retrieved from the Internet: URL:http://web.archive.org/web/20080404152 856/http://www.tektro.com/02products/15rb. php [retrieved on 2010-07-02]
- Anonymous: "Mini-V RX1" Tektro Brake Systems 4 April 2008 (2008-04-04), pages 1-1, XP002590104 Retrieved from the Internet: URL:http://web.archive.org/web/20080404152 710/http://www.tektro.com/02products/10sb. php [retrieved on 2010-07-02]
- Anonymous: "Freestyle" Tektro Brake Systems 7 April 2008 (2008-04-07), pages 1-2, XP002590105 Retrieved from the Internet: URL:http://web.archive.org/web/20080407041 854/http://www.tektro.com/02products/13qb. php [retrieved on 2010-07-02]
- Christian Smolik: "Tabelle Schlauchreifen-/Felgen-Größen" Online-Glossar Velotechnik 6 October 2007 (2007-10-06), pages 4/8-4/8, XP002590106 Retrieved from the Internet: URL:http://web.archive.org/web/20071006020 838/http://www.smolik-velotech.de/glossar/ tabelle3.htm [retrieved on 2010-07-02]

## Description

### BACKGROUND OF THE INVENTION

### 1. Field of Invention

The invention relates to bicycle brakes and more particularly to a front brake disposed behind a fork of a racing bicycle for reducing air resistance.

### 2. Description of Related Art

How to reduce air drag in order to increase speed is the main consideration of designing a racing bicycle. Lighter material is always pursued in the racing bicycle design. An aerodynamic shape is also important in designing a racing bicycle. The invention described below is directed to such effort, particularly the front brake. Document DE 10 2009 024890 A1 on which the preamble of claim 1 is based discloses a brake assembly with reduced air resistance , wherein the front fork of a bicycle has leg like extrusions in rearward direction. Upon this leg like extrusions brake arms are mounted with several screws orthogonally to the rearward direction.

Document DD 275 022 A1 discloses a brake assembly with reduced air resistance, wherein a plate is mounted upon the front fork of a bicycle. Upon this plate brake arms are mounted with a tension body containing a spring.

Document US 2008/035431 A1 discloses a brake assembly with reduced air resistance, wherein the front fork of a bicycle has cavities and/or notches, in which the parts of the brake are mounted.

### SUMMARY OF THE INVENTION

It is therefore one object of the invention to provide an assembly assembly for a racing bicycle comprising a front brake and a fork.
This object is solved by an assembly comprising the features of the claim.

The above and other objects, features and advantages of the invention will become apparent from the following detailed description taken with the accompanying drawings.

### BRIEF DESCRIPTION OF THE DRAWINGS

FIG. 1 is a perspective view of a front brake of a racing bicycle according to the invention, the brake being disposed behind a fork and adjacent thereto;
FIG. 2 is another perspective view of FIG. 1 but viewing from another angle;
FIG. 3 is an exploded view of the brake;
FIG. 4 is a side view of FIG. 1;
FIG. 5 is a rear view of an upper portion of FIG. 1 with washers mounted thereon;
FIG. 6 is a view similar to FIG. 5 but without washers;
FIG. 7 is a view similar to FIG. 1 with an upper portion of the fork shown in cross-section; and
FIG. 8 is a rear view of an upper portion of the fork and the brake with the brake cable being disposed in the right opposite to that shown in FIG. 5.

### DETAILED DESCRIPTION OF THE INVENTION

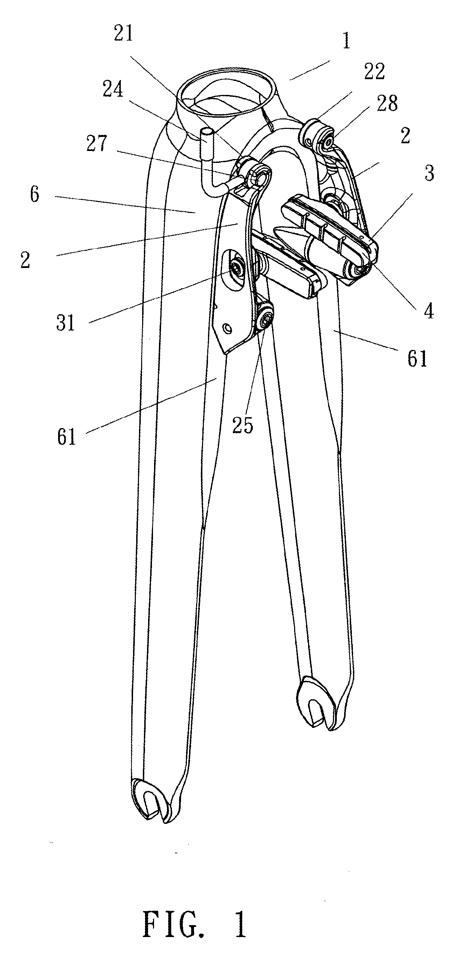

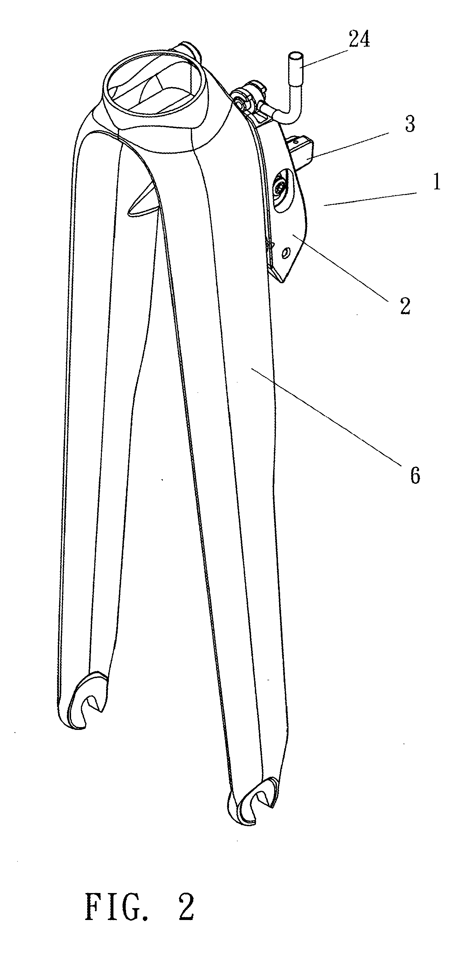

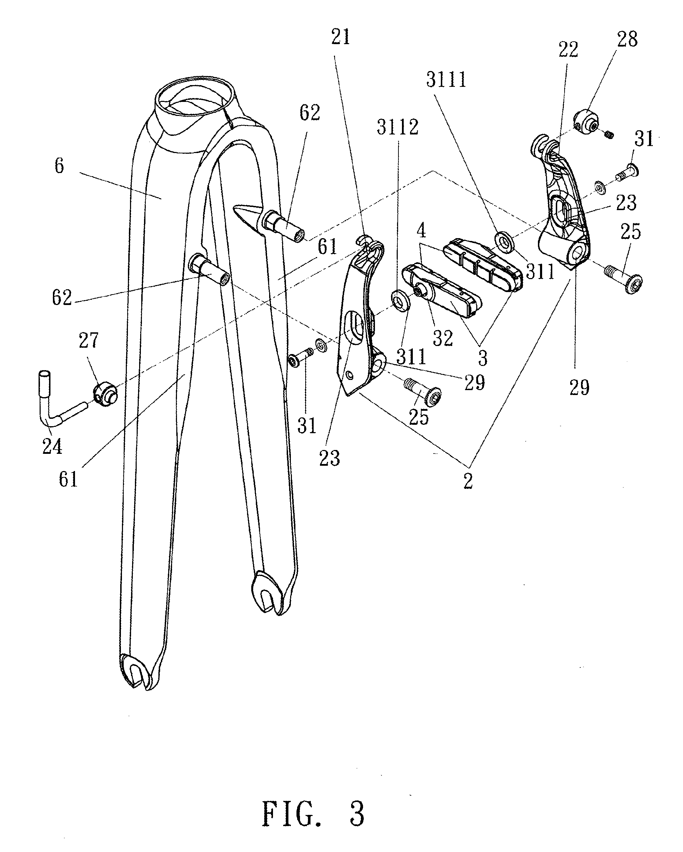

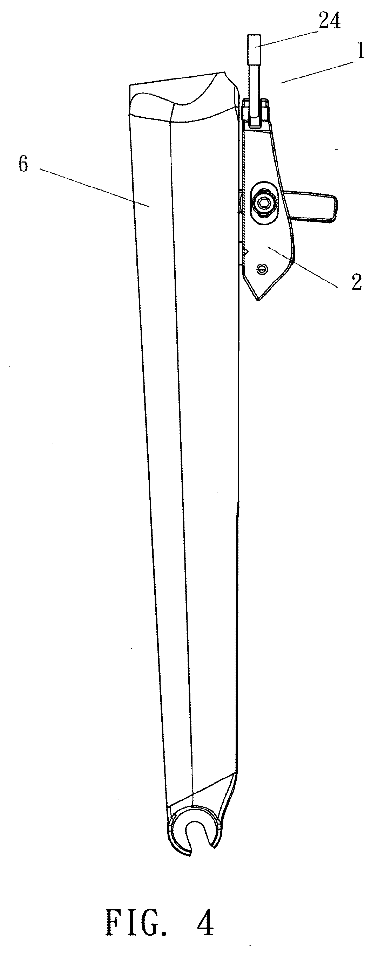

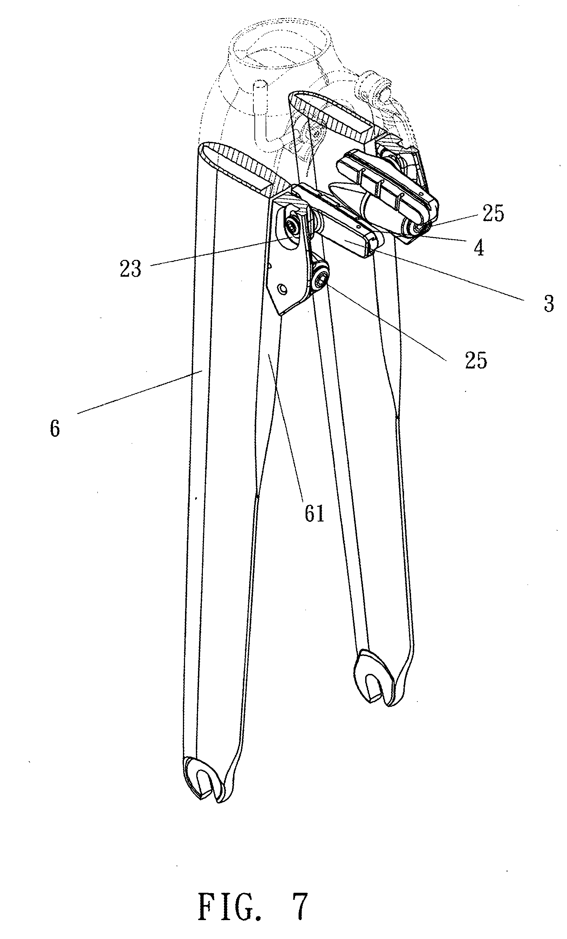

Referring to FIGS. 1 to 7, a front brake 1 of a racing bicycle in accordance with the invention is shown. A fork 6 comprises an arc-shaped rear portion 61 having two opposite, bossed, threaded holes 62 extending rearward. The brake 1 comprises the following components as discussed in detail below.

One longitudinally elongated brake caliper arm 2 comprises an upper bifurcated member 21 adapted to fasten a brake cable 24 by means of a brake cable lock 27, an intermediate through hole 23, a brake pad mount 3 having a convex outer portion 32, a washer 311 having a concave inner surface 3111 and a convex outer surface 3112, and a brake pad 4 secured to the brake pad mount 3. The brake pad mount 3 is releasably secured onto the through hole 23 by driving a screw 31 through the through hole 23 and the washer 311 into a bossed, threaded hole in the convex outer portion 32 in which the concave inner surface 3111 of the washer 311 is matingly engaged with the convex outer portion 32 and the convex outer surface 3112 is matingly engaged with a concave portion on one end of the through hole 23. The brake caliper arm 2 further comprises a protruded lower channel 29. A screw 25 can be driven into the channel 29 to secure to the threaded hole 62 for fastening the brake caliper arm 2 and the fork 6 together.

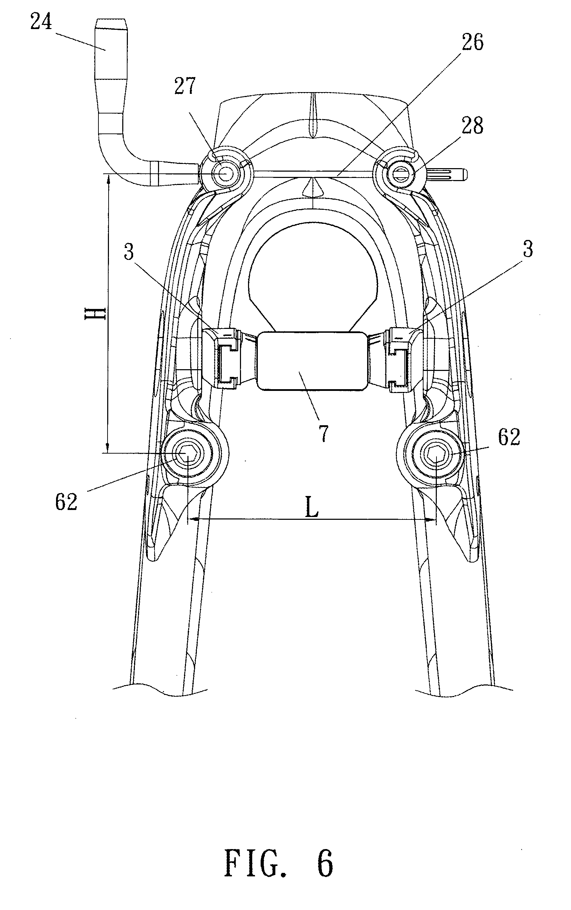

Likewise, the other longitudinally elongated brake caliper arm 2 comprises an upper bifurcated member 22 with a brake cable lock 28 fastened therein. Moreover, an end portion 26 of the brake cable 24 is further fastened between the bifurcated members 21 and 22 (see FIG. 6).

The other longitudinally elongated brake caliper arm 2 further comprises an intermediate through hole 23, a brake pad mount 3 having a convex outer portion 32, a washer 311 having a concave inner surface 3111 and a convex outer surface 3112, and a brake pad 4 secured to the brake pad mount 3. The brake pad mount 3 is releasably secured onto the through hole 23 by driving a screw 31 through the through hole 23 and the washer 311 into a bossed, threaded hole in the convex outer portion 32 in which the concave inner surface 3111 of the washer 311 is matingly engaged with the convex outer portion 32 and the convex outer surface 3112 is matingly engaged with a concave portion on one end of the through hole 23. The other brake caliper arm 2 further comprises a protruded lower channel 29. A screw 25 can be driven into the channel 29 to secure to the threaded hole 62 for fastening the other brake caliper arm 2 and the fork 6 together.

The brake pads 4 are adapted to compress against a wheel rim 7 for braking a racing bicycle as known in the art.

A distance L between centers of two threaded holes 62 is in a range of 59 mm to 63 mm.

A distance H between centers of the brake cable lock 27 and the threaded hole 62 of the same side is in a range of 60mm to 70mm.

Alternatively, the washers 311 can be eliminated with the convex outer portions 32 of the brake pad mounts 3 matingly engaged with concave portions on the other ends of the through holes 23 (see FIG. 6).

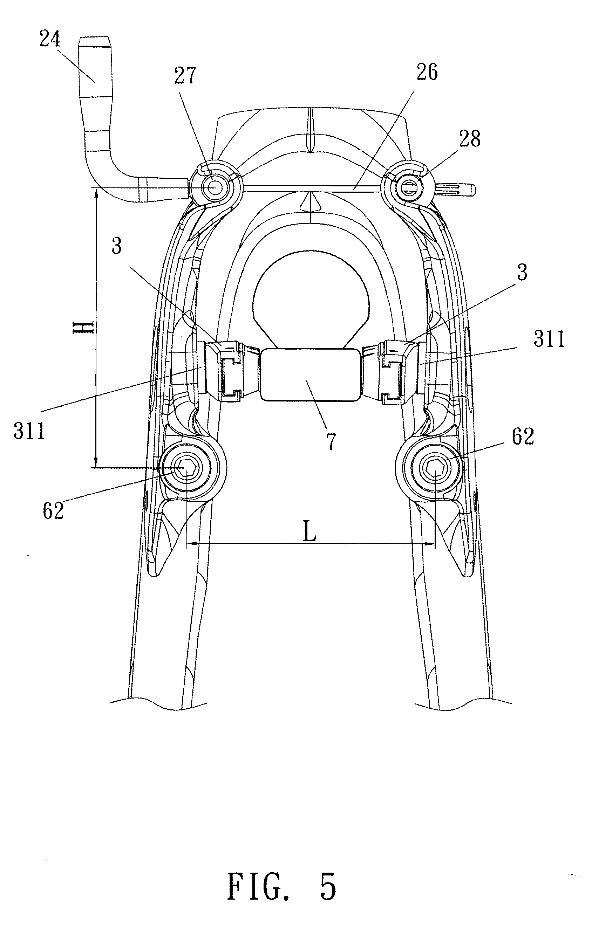

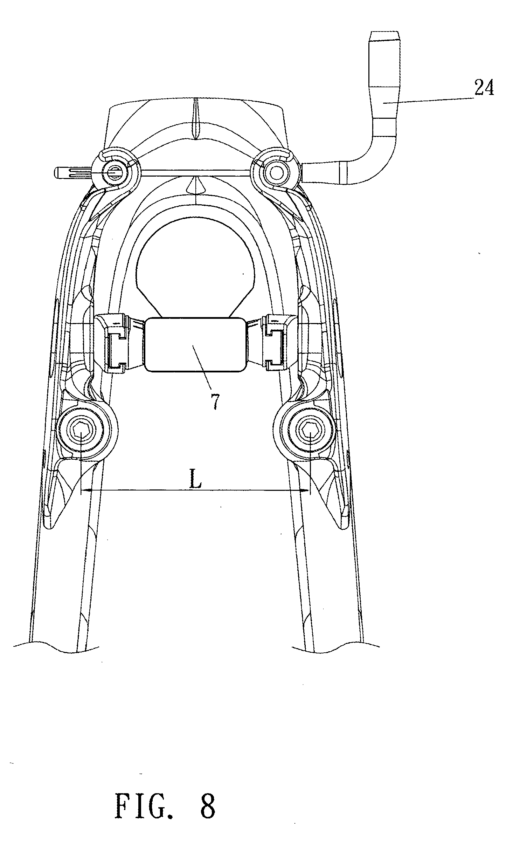

Referring to FIG. 8, a rear view of an upper portion of the fork and the brake is shown. The brake cable 24 of this configuration is fastened at the right side opposite to that shown in FIG. 5.

As shown in FIG. 5, the front brake 1 is disposed behind the fork 6 with no projecting lateral portions (i.e., the front brake 1 being substantially hidden by the fork 6 when viewing from a front end of the bicycle). Therefore, air resistance of the front brake and the fork can be reduced to a minimum.

While the invention herein disclosed has been described by means of specific embodiments, numerous modifications and variations could be made thereto by those skilled in the art without departing from the scope of the invention set forth in the claims.

## Claims

1. An assembly for a racing bicycle comprising:
a front brake (1) and a fork (6),
a first brake caliper arm (2) of said front brake (1) being threadedly secured to the fork 6 at a first point and comprising an upper first bifurcated member (21) adapted to lockingly secure to a brake cable (24), a first through hole (23) disposed at an intermediateportion of the first brake caliper arm (2), a first brake pad mount (3) releasably secured to the first through hole (23), and a first brake pad (4) secured to the first brake pad mount (3);
and
a second brake caliper arm (2) of said front brake (1) being threadedly secured to the fork (6) at a second point and comprising an upper second bifurcated member (22) adapted to lockingly secure to the brake cable (24), a second through hole (23) disposed at an intermediate portion of the second brake caliper arm (2), a second brake pad mount (3) releasably secured to the second through hole (23), and a second brake pad (4) secured to the second brake pad mount (3),
wherein the front brake (1) is disposed behind the fork (6) with no outwardly projecting lateral portions;
**characterized in that**
the fork (6) comprises an arc-shaped rear portion (61) having two opposite, bossed, threaded holes (62) extending rearward,
wherein the first brake caliper arm (2) further comprises a protruded lower channel (29) and is threadedly secured to the fork (6) via a screw (25) driven through the lower channel (29) and secured to one of the two threaded holes (62),
wherein the second brake caliper arm (2) further comprises a protruded lower channel (29) and is threadedly secured to the fork (6) via another screw (25) driven through the lower channel (29) and secured to the other one of the two threaded holes (62),
wherein a distance between the first point of the first brake caliper arm (2) threadedly secured to the fork (6) and the second point of the second brake caliper arm (2) threadedly secured to the fork (6) is in the range of 59 mm to 63 mm; and
wherein a distance between the first point of the first brake caliper arm (2) threadedly secured to the fork (6) and a center of the upper first bifurcated member (21) is in the range of 60mm to 70mm.

## Patentansprüche

1. Anordnung für ein Rennrad umfassend:
eine Vorderbremse (1) und eine Gabel (6),
einen ersten Bremssattelschenkel (2) der Vorderbremse (1), welcher an einem ersten Punkt mit der Gabel (6) verschraubt ist und ein oberes, erstes gegabeltes Element (21), das angepasst ist, klemmend an ein Bremskabel (24) angeschlossen zu werden, ein an einem Zwischenteil des ersten Bremssattelschenkels (2) angeordnetes erstes Durchgangsloch (23), eine erste Bremsbelagbefestigung (3), die lösbar an dem ersten Durchgangsloch (23) angebracht ist, und einen an der ersten Bremsbelagbefestigung (3) befestigten ersten Bremsbelag (4) umfasst, und
einen zweiten Bremssattelschenkel (2) der Vorderbremse (1), welcher an einem zweiten Punkt mit der Gabel (6) verschraubt ist und ein oberes, zweites gegabeltes Element (22) das angepasst ist, klemmend an ein i3remskabel (24) angeschlossen zu werden, ein an einem Zwischenteil des zweiten Bremssattelschenkels (2) ausgebildetes zweites Durchgangsloch (23), eine zweite Bremsbelagbefestigung (3), die lösbar an dem zweiten Durchgangsloch (23) angebracht ist, und einen an der zweiten Bremsbelagbefestigung (3) befestigten zweiten Bremsbelag (4) umfasst,
wobei die Vorderbremse (1) hinter der Gabel angeordnet ist und keine seitlich überstehenden Teile umfasst;
**dadurch gekennzeichnet, dass**
die Gabel (6) ein bogenförmiges hinteres Teil (61) umfasst, das zwei sich nach hinten erstreckende, gegenüberliegende bombierte Gewindebohrungen (62) aufweist,
wobei der erste Bremssattelschenkel (2) ferner einen vorstehenden, unteren Kanal (29) umfasst und mittels einer Schraube (25) an der Gabel (6) angeschraubt ist, die durch den unteren Kanal (29) getrieben ist und an einer der beiden Gewindebohrungen (62) gesichert ist,
wobei der zweite Bremssattelschenkel (2) ferner einen vorstehenden, unteren Kanal (29) umfasst und mittels einer anderen Schraube (25) an der Gabel (6) angeschraubt ist, die durch den unteren Kanal (29) getrieben ist und der anderen der beiden Gewindebohrungen (62) gesichert ist,
wobei ein Abstand zwischen dem ersten Punkt, an dem der erste Bremssattelschenkel (2) mit der Gabel (6) verschraubt ist, und dem zweiten Punkt, an dem der zweite Bremssattelschenkel (2) mit der Gabel (6) verschraubt ist, in einem Bereich von 59 mm bis 63 mm liegt, und
wobei ein Abstand zwischen dem ersten Punkt, an dem der erste Bremssattelschenkel (2) mit der Gabel (6) verschraubt ist, und einem Zentrum des oberen ersten gegabelten Elements (21) in einem Bereich von 60 mm bis 70 mm liegt.

## Revendications

1. Montage pour vélo de course comprenant :
un frein avant (1) et une fourche (6),
un premier bras d'étrier de frein (2) dudit frein avant (1) qui est fixé de manière filetée à la fourche (6) à un premier point et comprenant un premier élément bifurqué supérieur (21) adapté pour être fixé par blocage à un câble de frein (24), un premier trou traversant (23) disposé sur une portion intermédiaire du premier bras d'étrier de frein (2), un premier support de patin de frein (3) fixé de manière amovible au premier trou traversant (23) et un premier patin de frein (4) fixé au premier support de patin de frein (3) et
un second bras d'étrier de frein (2) dudit frein avant (1) qui est fixé de manière filetée à la fourche (6) à un second point et comprenant un second élément bifurqué supérieur (22) adapté pour être fixé par blocage à un câble de frein (24), un second trou traversant (23) disposé sur une portion intermédiaire du second bras d'étrier de frein (2), un second support de patin de frein (3) fixé de manière amovible au second trou traversant (23) et un second patin de frein (4) fixé au second support de patin de frein (3),
le frein avant (1) étant disposé derrière la fourche (6) avec aucune portion latérale en projection vers l'extérieur,
**caractérisé en ce que**
la fourche (6) comprend une portion arrière de forme arquée (61) ayant deux trous filetés bosselés opposés (62) qui s'étendent vers l'arrière,
le premier bras d'étrier de frein (2) comprenant de plus un canal inférieur en saillie (29) et qui est fixé de manière filetée à la fourche (6) par l'intermédiaire d'une vis (25) qui traverse le canal inférieur (29) et fixée à l'un des deux trous filetés (62),
le second bras d'étrier de frein (2) comprenant de plus un canal inférieur en saillie (29) et qui est fixé de manière filetée à la fourche (6) par l'intermédiaire d'une autre vis (25) qui traverse le canal inférieur (29) et fixée à l'autre des deux trous filetés (62),
une distance entre le premier point du premier bras d'étrier (2) fixé de manière filetée à la fourche (6) et le second point du second bras d'étrier (2) fixé de manière filetée à la fourche (6) étant de l'ordre de 59 mm à 63 mm et
une distance entre le premier point du premier bras d'étrier (2) fixé de manière filetée à la fourche (6) et un centre du premier élément bifurqué supérieur (21) étant de l'ordre de 60 mm à 70 mm.
